Europäisches Patentamt

European Patent Office

Office européen des brevets

(11) Publication number: **0 164 179**
A2

# EUROPEAN PATENT APPLICATION

(21) Application number: **85301556.8**

(22) Date of filing: **06.03.85**

(51) Int. Cl.⁴: **C 08 L 23/08,** C 09 J 3/14,
A 41 D 27/06

(30) Priority: **06.03.84 GB 8405877**

(43) Date of publication of application: **11.12.85**
**Bulletin 85/50**

(84) Designated Contracting States: **AT BE CH DE FR IT LI
LU NL SE**

(71) Applicant: **DERMIL RESEARCH LIMITED, 10 Upper
Lambricks, Rayleigh Essex SS6 8BP (GB)**

(72) Inventor: **Miles, Derek Cyril, 42 High Road, Hockley
Essex (GB)**
Inventor: **Miles, David Lindsay, 42 High Road, Hockley
Essex (GB)**

(74) Representative: **Day, Jeremy John et al, REDDIE &
GROSE 16 Theobalds Road, London, WC1X 8PL (GB)**

(54) **Adhesives and applications thereof.**

(57) A polymer system for use as an adhesive for adhesive especially for adhering textile materials to textiles and other substrates comprises an ungrafted terpolymer comprising units of ethylene, a $C_1$ to $C_4$ alkyl acrylate and an unsaturated acid, the terpolymer comprising from 1 to 40 parts by weight of alkyl acrylate, from 0.5 to 40 parts by weight of unsaturated acid and the residue being ethylene, the melt index (D 1238) of the polymer being within the range of from 2 to 250 g/10 min, preferably 5 to 100 g/10 min and even more preferably 5 to 40 g/10 min. The preferred alkyl acrylate is ethyl acrylate. The preferred unsaturated acids are maleic and fumaric acid, the former being preferred for use in the form of its anhydride.

Adhesive compositions may comprise the terpolymer and a cross-linking agent.

ACTORUM AG

ADHESIVES AND APPLICATIONS THEREOF

This invention relates to adhesives, and especially to adhesives for use in adhering interlinings to outer fabrics.

It is common practice in the manufacture of articles of clothing incorporating interlining stiffeners, for example, in collars and cuffs and the facings of jackets and the like to adhere the interlining material to the outer fabrics by means of a thermoplastic adhesive thereby avoiding the necessity for sewing. The adhesive layer may be either discontinuous, in a regular or random form, or continuous, for example, as a film or web.

One of the earliest used thermoplastic adhesives was low density polyethylene which was usually applied in powder form, for example, by scatter coating. The main disadvantage with this material is that relatively low bond strengths are achieved and the resultant bond has very poor resistance to dry cleaning solvents.

Polyamides have also been widely used in adhering interlinings to fabrics. They have a better dry cleaning resistance than low density polyethylene but there are limitations on washing (see for example Polymer Technology by D C Miles and J H Briston pages 609 to 630, Chemical Publishing Co., New York (1979).

These traditional adhesive systems operate by mechanical adhesion, that is to say the polymer flows and attaches itself around the fibres of the interlining and the outer fabric.

This invention provides an adhesive that forms a chemical bond with many of the textile materials used as interlinings and as outer fabrics and also with various other substrates and therefore produces an extremely strong bond with good resistance to dry cleaning and washing.

- 2 -

According to the invention the new polymer system as an adhesive for adhesive for adhering textile materials to textiles and other substrates comprises an ungrafted terpolymer comprising units of ethylene, a $C_1$ to $C_4$ alkyl acrylate and an unsaturated acid, the terpolymer comprising from 1 to 40 parts by weight of alkyl acrylate, from 0.5 to 40 parts by weight of unsaturated acid and the residue being ethylene, the melt index (D 1238) of the polymer being within the range of from 2 to 250g/10min, preferably 5 to 100g/10min and even more preferably 5 to 40g/10min.

The preferred alkyl acrylate for use in the terpolymer is ethyl acrylate because of its ease of handling and because the resultant terpolymer has overall good properties making it suitable as an adhesive. The preferred unsaturated acids used in the terpolymer are maleic and fumaric acid, the former being preferred for use in the form of its anhydride.

The terpolymers can be obtained in many forms and can be applied, for example, as dispersions, or as powders, films or granules for hot melt adhesives. Because of the presence of the unsaturated acid the polymer is unsaturated and it is possible to cross-link the polymer. This can be achieved using a wide variety of monomeric or polymeric cross-linking agents, for example, etherified melamine and urea formaldehyde resins, urea and melamine formaldehyde resins, isocyanates, butyrals and formals, epoxides polyamines, polyamines, polyesters and vinyl alcohol polymers and copolymers. Alternatively, the cross-linking agent may comprise a blocking agent, for example, an isocyanate and a phenol.

If one or both of the substrates to be joined has functional groups capable of reacting with the terpolymers, no additional cross-linking agent may be needed. As such substrates there may be mentioned ethylene-vinyl alcohol copolymer or polyvinyl butyral or formal substrates.

The polymer may be obtained in a wide range of particle sizes, a satisfactory distribution ranging from 1 to 1000 microns. Liquid adhesive systems can best be obtained using particles below 100 microns and dispersing them in water using standard thickening agents, for example, sodium carboxy methyl cellulose, hydroxy ethyl cellulose or a polyacrylate and dispersing agents. The techniques used are generally the same as in conventional paste techniques and the reactive components, of course, must be active at temperatures above those required to drive off the liquid phase of the system, for example, above 100°C.

If the polymer is to be applied by a powder point technique the particle size range is preferably from 1 to 250 microns and the polymer may be applied, for example, by an engraved roller technique or a rotary screen. For scatter coating the particles may be in the range from 1 to 1000 microns.

The polymers may also be applied by hot melt printing using either an engraved roll or the rotary screen. This is preferably done using granules rather than powder, mainly for economic reasons but is possible to operate this technique using powder.

The polymers may also be used as films, for example, in thicknesses of from 5 to 500 microns. Films may be co-extruded, for example, with another polymer substrate capable of undergoing cross-linking with the adhesive polymer. As an alternative to the use of a film the polymers may be used as a mesh or net, formed, for example, by slitting or embossing the film along spaced parallel paths and then stretching the film in the direction perpendicular to the paths to cause the film to split in the weakened areas. By this means a mesh having rhombic openings can be obtained.

When the polymers are applied as powders, pastes or as hot melt adhesives, there is usually no significant change in the hand of the laminated material. When the polymer is used in film form there may be some stiffening but generally this merely enhances the effect of the interlining.

The polymers can be activated as adhesives at temperatures in the range of from 80°C to 180°C and can thus be used with little risk of discoloring or damaging one or more of the components of the structure being produced.

In addition to being suitable for adhering textiles to textiles, which may either be the same or different, the polymers may also be used for adhering textiles to other substrates, for example, to metals, plastics, paper, foams or films, wood or glass and can also be used successfully in other fields, for example, adhesion of rubber or plastics to glass, where the reactive groups of the polymer, for example, the carboxyl groups or the double bonds can enter into a chemical reaction with one or other of, preferably both, of the materials to be bonded. The polymers of the invention can also be used as coating materials.

The following examples illustrate the invention :-

In all of the examples the terpolymer used is an ethylene/ethyl acrylate/maleic anhydride (90:7:3) polymer having a melt flow index of 5 to 20gm/10min, referred to as DR-240

### Example 1

250g of the finely ground DR-240 (80 microns) is dispersed in 500g of water with 5g Natrosol 250 HHR and 0.4g Triton DF 16.

100g of resultant paste are mixed with 10g Isonate 136 T. The dispersion is then printed through a 25 mesh nickel screen on to a 60 x 60 cotton. It is then dried at 120°C for three minutes. The dried coated cotton substrate is then bonded to a polyester filament fabric and fused for 15 seconds at 160°C/10 psi.

Results: (Peel Strength 2.5 cm wide strip)

|  | Adhesion | After Dry Cleaning | After Washing |
|---|---|---|---|
| Control (without Isonate) | 1.3 kilos | 0.8 kilos | 0.75 kilos |
| With Isonate | 2.5 kilos | 2.0 kilos | 2.0 kilos |

## Example 2

100g of ground DR-240 (300 microns) is dry mixed with 10g Desmodur AP Stabil. The resultant powder is scatter coated on to a polyester polyurethane foam and bonded to a nylon face fabric.

|  | Adhesion |
|---|---|
| Control (without Desmodur) | 1.5 kilos |
| With Desmodur AP | · Foam Tears |

## Example 3

A dispersion of DR-240 is made as in Example 1. Instead of Isonate 136, Cymel 385 (Etherified melamine formaldehyde) is added in the proportion of 15%. A small amount of p-toluene sulphonic acid (0.5%) is also added. The resultant dispersion is printed through a 25 mesh screen on to weft inserted canvas. The dried coated substrate is then bonded to a polyester/wool fabric.

Results: (Peel strength 2.5 cm wide strip)

|  | Adhesion | After Dry Cleaning |
|---|---|---|
| Control (without Cymel) | 1.1 kilos | 0.5 kilos |
| With Cymel | 2.2 kilos | 2.0 kilos |

## Example 4

100g of ground DR-240 (300 microns) is dry mixed with 20g Araldite 7007 powder. The resultant powder is then heated for five minutes at 150°C. Melting points were checked before mixing and after.

|  | Kofler Mpt |
|---|---|
| DR-240 | 85°C |
| DR-240 & Araldite 7007 | 150°C |

Example 5

Films of DR-240 (25 microns) were laminated to 25ml SOARNOL (EVOH) film at 150˅C for two minutes.  The melting point of the Soarnol film was checked before and after lamination.

Before      80˅C
After       120˅C

Films of DR-240 were laminated to both sides of an EVOH film. The resultant composite was resistant to dry cleaning solvents.

Example 6

A dispersion of DR-240 was made as in Example 3 with the same cross-linking agent (Cymel 385).  A film of the dispersion is spread on to a glass plate at a thickness of 25 THOU.  The coated glass is then heated for five minutes at 145˅C.  The adhesion to the glass is measured with and without cross-linking agent and the melting points of the coating are checked.  The coated glass was also immersed in toluene at RT for 24 hours and the adhesion checked.

|                      | Adhesion   | Immersion in Toluene |
|----------------------|------------|----------------------|
| Before               | 1.0 kilos  | 0.2 kilos            |
| After cross-linking  | 1.85 kilos | 1.1 kilos            |

Example 7

Ground DR-240 (300 microns) is coated on to a polyester polyurethane foam at a weight of 25gsm.  The same powder is then mixed with Araldite 7007 at a weight of 20% and coated on to a second sample of the foam in the same way.  Both coated samples are laminated to aluminium foil and adhesion checked.

Without Araldite
7007                  1.5 kilos
With Araldite
7007                  Foam Tears

CLAIMS

1. An ungrafted terpolymer comprising units of ethylene, a $C_1$ to $C_4$ alkyl acrylate and an unsaturated acid, the terpolymer comprising from 1 to 40 parts by weight of alkyl acrylate, from .5 to 40 parts by weight of unsaturated acid and the residue being ethylene, the melt index (D1238) of the polymer being within the range of from 2 to 250g/10min.

2. A polymer according to claim 1 having a melt index of from 5 to 100g/10min.

3. A polymer according to claim 2 having a melt index of from 5 to 40g/10min.

4. A polymer according to any one of claims 1 to 3, wherein the alkyl acrylate is ethyl acrylate.

5. A polymer according to any one of claims 1 to 4, wherein the unsaturated acid is maleic or fumaric acid.

6. A polymer according to claim 5, wherein the unsaturated acid is maleic anhydride.

7. An adhesive system comprising a polymer according to any one of claims 1 to 6 in admixture with a cross-linking agent.

8. An adhesive according to claim 7, wherein the cross-linking agent is an etherified melamine or urea formaldehyde resin, a urea or melamine formaldehyde resin, an isocyanate, a butyral or formal, an epoxide, a polyamine, a polyamide, a polyester or a vinyl alcohol polymer or copolymer.

9. An adhesive according to claim 7 or claim 8, wherein the

0164179

polymer is in the form of a dispersion, a powder or granules, a film or a mesh or net.

10. A method of adhering two materials which comprises applying between the materials a polymer according to any one of claims 1 to 3 and cross linking the polymer with one or both of the materials to be joined.

11. A method according to claim 10, wherein one or both of the materials to be joined contain groups capable of reacting with the polymer.

12. A method according to claim 10 or claim 11, wherein the polymer is applied in admixture with a cross-linking agent for the polymer.

13. A method according to any one of claims 10 to 12 for adhering interlining stiffeners to other textile materials.